(19) Europäisches Patentamt / European Patent Office / Office européen des brevets

(11) **EP 4 763 538 A1**

(12) **EUROPEAN PATENT APPLICATION**

(43) Date of publication:
**24.06.2026 Bulletin 2026/26**

(51) International Patent Classification (IPC):
***B60C 11/24*** *(2006.01)*

(21) Application number: 24221668.7

(22) Date of filing: **19.12.2024**

(52) Cooperative Patent Classification (CPC):
**B60C 11/246**

| | |
|---|---|
| (84) Designated Contracting States:<br>**AL AT BE BG CH CY CZ DE DK EE ES FI FR GB GR HR HU IE IS IT LI LT LU LV MC ME MK MT NL NO PL PT RO RS SE SI SK SM TR**<br>Designated Extension States:<br>**BA**<br>Designated Validation States:<br>**GE KH MA MD TN**<br><br>(71) Applicant: **Bridgestone Europe NV/SA**<br>**1930 Zaventem (BE)**<br><br>(72) Inventors:<br>• **BENEDETTI, ROBERTO**<br>**00128 Roma (IT)** | • **BORTOLOTTO, Valerio**<br>**00128 Roma (IT)**<br>• **TESTI, Giulio**<br>**00128 Roma (IT)**<br>• **POGGI, Marco**<br>**00128 Roma (IT)**<br>• **ALLEVA, Lorenzo**<br>**00128 Roma (IT)**<br><br>(74) Representative: **Bardehle Pagenberg**<br>**Partnerschaft mbB**<br>**Patentanwälte Rechtsanwälte**<br>**Prinzregentenplatz 7**<br>**81675 München (DE)** |

(54) **METHOD AND APPARATUS FOR DETERMINING TIRE WEAR**

(57) This disclosure is generally directed to computer-implemented methods and apparatus for calculating and/or monitoring a tire wear rate of a vehicle.

In one embodiment, a computer-implemented method for determining tire wear of at least one tire mounted to a vehicle is provided. The method comprises obtaining a vehicle speed information of the vehicle, $v_{vehicle}$, obtaining tire movement data from at least one sensor mounted to the at least one tire or at least one rim of the vehicle, and determining the tire wear based on the tire movement data and vehicle speed information.

**Fig. 7**

## Description

TECHNICAL FIELD

FIELD OF INVENTION

This disclosure is generally directed to computer-implemented methods and apparatus for calculating and/or monitoring a tire wear rate of a vehicle.

BACKGROUND

Tire wear in single vehicles or fleet management is a challenge which has an impact on vehicle safety and economics. Further, legal obligations require management of tire wear. Thus, there is a need to manage tire wear to allow tire replacement when needed. However, inspection of tires on vehicles may be cumbersome and difficult. In general, predicting tire wear may be inaccurate.

Thus, a need exists for a simple, accurate, and reliable way to determine and predict tire wear.

SUMMARY

The problems stated above are at least in part overcome by the following disclosure.

In one embodiment, a computer-implemented method for determining tire wear of at least one tire mounted to a vehicle is provided. The method comprises obtaining a vehicle speed information of the vehicle, $v_{vehicle}$, obtaining tire movement data from at least one sensor mounted to the at least one tire or at least one rim of the vehicle, and determining the tire wear based on the tire movement data and vehicle speed information.

The at least one sensor may be a tire mounted sensor, TMS. In other embodiments, the at least one sensor may be a rim mounted sensor. In yet other embodiments, combinations of different sensors may be used.

This may have the advantage of accurately assessing tire wear without requiring direct contact with or inspection of the tire.

In another embodiment, a method is provided in which the determining is further based on an assumed vehicle speed, $v_{TMS}$. The assumed vehicle speed may be determined based on the tire movement data. For example, the assumed vehicle speed may be calculated based on the tire movement data and/or be inferred from a look-up table based on the tire movement data etc.

The vehicle speed information $v_{vehicle}$ may be obtained independently from tire movement as described herein. By comparing $v_{vehicle}$ with $v_{TMS}$, for example in cases in which the assumed vehicle speed is determined based on tire movement data, the comparison may allow to infer information regarding the tire wear, as the radius of the tire changes, resulting in discrepancies between $v_{vehicle}$ and $v_{TMS}$.

The determining may be further based on a correction factor. The correction factor may have a functional dependence on the assumed vehicle speed.

The comparison may comprise a mathematical operation or combinations of mathematical operations like a difference, a division, a multiplication etc. of $v_{vehicle}$ and $v_{TMS}$.

In another embodiment, a method is provided where the determining of the tire wear is further based on an assumed tire radius, R, of the at least one tire of the vehicle. The assumed tire radius can be determined at least in part based on the following equation:

$$R = SW \cdot AR + \frac{d_{RIM}}{2},$$

wherein SW is a section width of the at least one tire, AR is the aspect ratio of the tire and $d_{RIM}$ is a diameter of a rim of the at least one tire.

This may have the advantage of allowing for more accurate determination of tire wear by accounting for variations in tire size. The estimate of tire wear may be simplified by comparing the measurements with expected measurements based on R.

In another embodiment, a method is provided where the determining of the tire wear is further based on a revolution period of the at least one tire, T. The revolution period may be determined based on the tire movement data.

This may have the advantage of providing a more accurate determination of tire wear by taking into account the actual speed and rotation of the tire.

The assumed vehicle speed, $v_{TMS}$, may be determined based at least partially on the following equation:

$$v_{TMS} = \frac{2 \cdot \pi \cdot R}{T}.$$

This may allow to estimate an expected value for $v_{TMS}$ based on R and measured T.

In another embodiment, determining of the tire wear is further based on a determination of the centrifugal acceleration, ac, of the at least one tire. The centrifugal acceleration can be determined based on data from the at least one sensor.

This may have the advantage of allowing for more accurate determination of tire wear by accounting for variations in tire rotation and speed. As detailed herein, the acceleration force present may impact a shape of the tire. If the acceleration is accounted for, such effects may be taken into account. We note that this applies to other embodiments disclosed herein as well.

In some embodiments, $v_{TMS}$ is determined at least partially based on the following equation:

$$v_{TMS} = \sqrt{a_c \cdot R}.$$

Using such an equation may allow a simple way to determine $v_{TMS}$ based on R. R may be calculated as described above. $a_c$ may be measured, for example by the at least one sensor.

In some embodiments, the determining is based on: determining a rolling radius, $R_r$, of the at least one tire based on $v_{vehicle}$ and the tire movement data.

Determining a rolling Radius may allow to take deformation due to rotation velocity into effect. This will be further detailed below.

The determining may be based on a deviation between $R_r$ and a theoretical rolling radius, $R_{r,theoretical}$.

The theoretical rolling radius may be determined for physical conditions of the at least one tire and based on technical data of the at least one tire under the assumption of no tire wear.

As detailed herein, determining the deviation may simplify determination of the tire wear.

$R_r$ may be determined based on T and may be based at least in part on the following equation:

$$R_r = v_{vehicle} \cdot \frac{T}{2 \cdot \pi}.$$

$R_r$ may be at least in part based on the following equation:

$$R_r = \frac{v_{vehicle}^2}{a_c}.$$

Monitoring the temporal evolution of $R_r$ may simplify obtaining a quantitative measurement for tire wear. In some embodiments, $R_r$ is a direct measurement of the remaining tire size and may correspond to an actual measurement of the tire.

The determining of the tire wear may be based on specific data. the specific data is at least one of the following: $v_{vehicle}$ determined based at least on part on geographic positions of the vehicle, rolling radial acceleration of the at least one tire, lateral acceleration of the vehicle, longitudinal acceleration of the at least one tire, longitudinal acceleration of the vehicle, footprint size estimation of the at least one tire, speed estimation of the at least one tire, rotation position of the at least one tire, pressure of the at least one tire, temperature of the at least one tire, temperature of the environment of the vehicle, load on the at least one tire, vertical load on the at least one tire, vehicle usage, tractor load, region, country, geographic position of the vehicle, geographic position of the vehicle determined by satellite data, geographic position of the vehicle determined by camera data, geographic position of the vehicle determined by sensor data, geographic position of the vehicle determined by toll data, global positioning system, GPS, coordinates of the vehicle, road type information, vehicle load information, gear shifting information, engine rotations per minute, RPM, information, throttle pedal position of the vehicle, brake pedal position of the vehicle, steering wheel angle of the vehicle, manufacturer of the at least one tire, manufacturer of the vehicle, chassis information of the vehicle, tractor load information of the vehicle, model information of the at least one tire, pattern information of the at least one tire, size information of the at least one tire, mounting position information of the at least one tire, retread information of the at least one tire, manufacturing information, preferably batch number information, of the at least one tire.

The load of the tire may be the vertical load, for example provided from the at least one sensor or by an external measurement system.

Vehicle usage may refer to the kind of vehicle transportation type, for example urban, long haul, etc. and/or trip schedule.

Tractor load, for example provided by an external measuring unit, may be used to determine convenient points in time for determine the tire wear. In other embodiments the information regarding tractor load may be taken into account when determining the tire wear, for example by applying a corrective function to compensate effects of the tractor load or to account for such effects. This may similarly be applied for the other specific data.

Taking the specific data into account may allow to account for the influence of the specific factors on the determination. In some embodiments, a machine learning model is provided which takes a plurality of the specific factors into account. Thus, taking the specific factors into account may improve the accuracy of the tire wear determination.

In some embodiments, the calculation and/or at least one measurement of the at least one sensor is conducted at specific points in time, where the points in time are selected based on points in time with a low variability of the specific data.

This may have the advantage of providing a more accurate determination of tire wear by minimizing errors caused by varying conditions. In some embodiments, the measurement accuracy of the at least one sensor may be known to be less accurate, for example on a rough road during strong steering angle. Thus, such measurements may be excluded from the analysis based on the variability of the specific data. In some embodiments, a low variability of specific data such as vertical acceleration may indicate steady state movement conditions of the vehicle, allowing for high accuracy data acquisition from the at least one sensor.

Low variability may be achieved if the acceleration of the vehicle, for example the vertical and/or lateral acceleration is below a threshold, for example zero or below 0.5 g, preferably below 0.2 g, preferably below 0.1 g.

In another embodiment, a method is provided that further comprises determining a projection regarding a replacement need for the at least one tire based on the tire wear.

This may have the advantage of allowing vehicle owners to plan for tire replacements and maintain the vehicle or a fleet of vehicles in good condition. The projection may be a simple projection like remaining distance or time interval before a replacement is required. This may allow optimizing use of the tire before replacement.

According to one embodiment, an apparatus for determining tire wear of a vehicle is configured to execute any of the above-mentioned methods.

This may have the advantage of providing an efficient and accurate means of determining tire wear without requiring manual calculations or direct measurements of the tire.

BRIEF DESCRIPTION OF THE DRAWINGS

Fig. 1a shows a tire with at least one sensor according to an embodiment in which an assumed vehicle speed is determined.

Fig. 1b shows a tire with at least one sensor according to an embodiment in which an assumed vehicle speed is determined.

Fig. 2 shows a tire with at least one sensor according to an embodiment in which a rolling radius is determined.

Fig. 3 shows examples of tire wear determined according to an embodiment.

Fig. 4 shows examples of tire wear determined according to a further embodiment.

Fig. 5A, Fig. 5B, and Fig. 5C illustrate exemplary data flows for collecting of information according to embodiments.

FIG. 6 shows a computer-implemented method according to an embodiment.

Fig. 7 shows a prediction for tire wear according to an embodiment.

DETAILED DESCRIPTION

The present disclosure provides computer-implemented methods and apparatus for determining the tire wear rate of a vehicle. The computer-implemented methods and apparatus according to this disclosure offer many advantages. The disclosure thereby allows determining optimum point in time for replacing the tires of a vehicle and therefore renders mobility of people as well as transportation of goods safer, greener, more reliable and more cost efficient.

Conceptually, the disclosure may be thought of as different approaches.

A first line of approach to determine tire wear based on comparing speeds, for example a speed determined based on data of the at least one sensor ("tire speed") with a independently determined speed of the vehicle. The comparison of the speeds may allow for an estimate of the tire wear.

A second line of approach may be based on rolling radius estimation. In the second approach, the rolling radius may be determined based on data of the at least one sensor and an independently determined speed of the vehicle. The determined rolling radius may be a direct indication of the tire wear. Thus, by keeping track of the rolling radius over time the tire wear may be determined.

First and second line of approach may be combined and various sensor data may be used, as will be explained in the following. Also, the two approaches may be mixed with aspects from the different approaches combined, as disclosed herein.

For example, the tire wear may independently determined based on first and second approach and then a refined tire wear may be determined based on both approaches in combination.

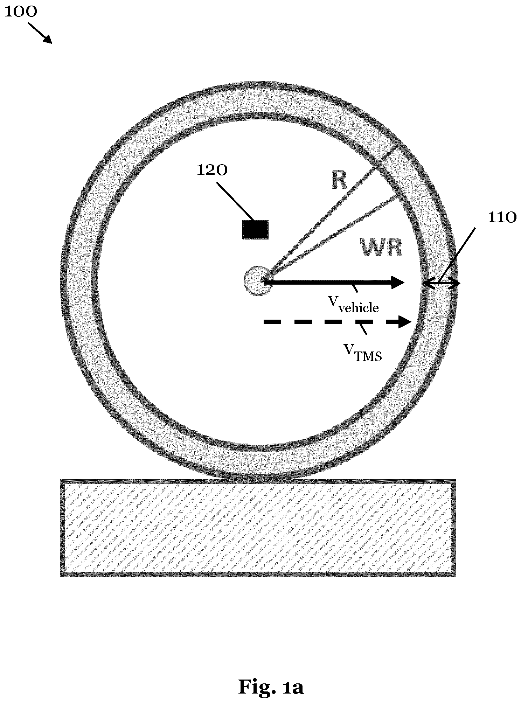

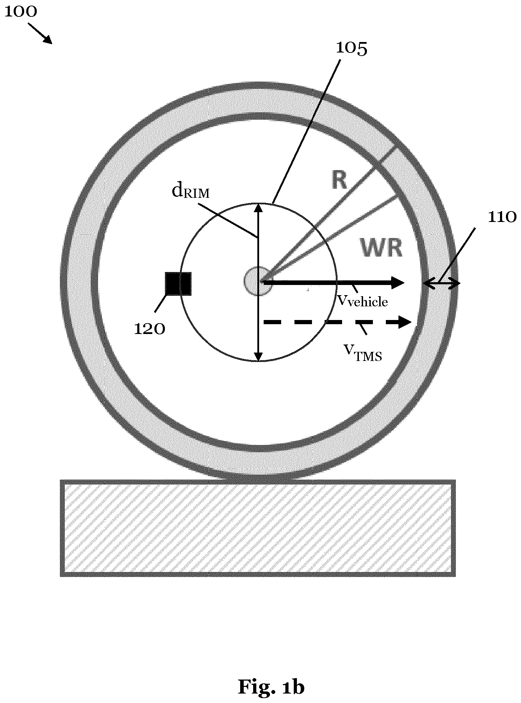

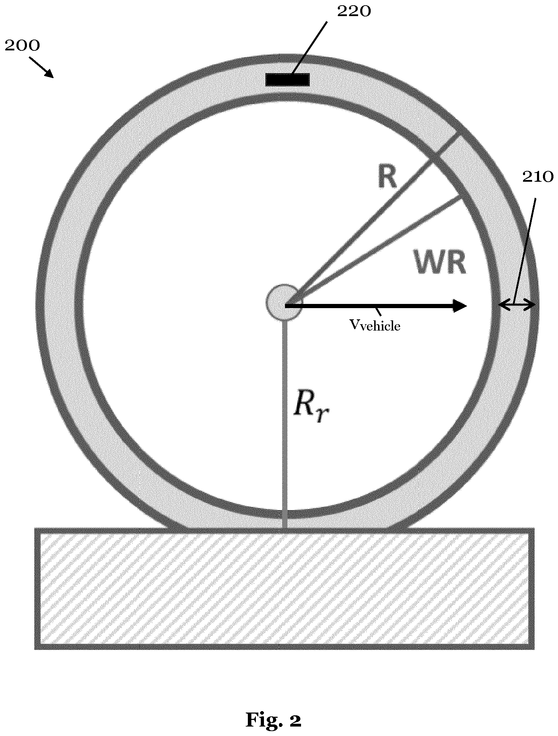

Fig. 1A, Fig. 1B, and Fig. 2 show various examples of a tire 100, 200 according to embodiments of the description.

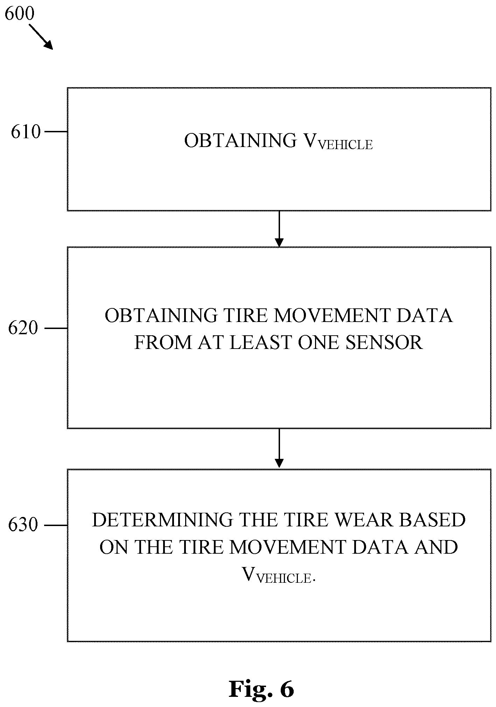

According to an embodiment, a computer-implemented method 600 for determining a tire wear 110, 210, 310, 410, 710 of at least one tire 100, 200 mounted to a vehicle 501 is provided. An example for a computer-implemented method 600 is explained with reference to Fig. 6.

As shown in Fig. 6, the method 600 may comprise obtaining, at 610, a vehicle speed information of the vehicle 501, $v_{vehicle}$.

$v_{vehicle}$ may be determined based at least on part on geographic positions of the vehicle. Many different ways to determine the geographic positions of the vehicle may be used, for example satellite data, camera data, sensor data, toll data, etc. Based on the data $v_{vehicle}$ may be determined as an instantaneous speed, for example based on temporal changes of the geographic positions over time. In other examples, it may be an average speed, for example based on passing time between landmarks in camera data for the vehicle or time between reaching toll data checkpoints etc.

As shown at 620 of Fig. 6, the method may comprise obtaining 620 tire movement data from at least one sensor 120 mounted to the at least one tire 100, 200 or at least one rim of the vehicle 501;

Fig. 1a, Fig. 1b, and Fig. 2 show various examples for the at least one sensor 120, 220. As shown in Fig.

1a, Fig. 1b, and Fig. 2, the at least one sensor may be mounted to the tire, see for example position of sensor 220, or the rim, see for example the position of sensor 120. In other embodiments, other mounting positions are also possible.

The at least one sensor may provide movement data such as position, acceleration, rotation period etc. The tire movement data may be physical measurements or based on physical measurements, for example derived quantities which are obtained from physical measurements with further processing steps. For example, a speed may be determined based on position information and time information for various position information etc. as is well known in the art.

As shown at 630 in Fig. 6, the method may further comprise determining 630 the tire wear 110, 210, 310, 410, 710 for the at least one tire 100, 200 based on: the tire movement data from the at least one sensor 120, 220 of the vehicle 501 and $v_{vehicle}$.

Turning to Fig. 1a and Fig. 1b, the determining 630 may be further based on an assumed vehicle speed, $v_{TMS}$, determined based on the tire movement data.

As indicated by the arrows in Fig. 1a and Fig. 1b, the determining 630 may be based on a comparison between $v_{TMS}$ and $v_{vehicle}$.

The comparison may comprise a difference, but other comparisons can be done, e.g. rate of change or other functional dependencies.

In one example, if $v_{TMS}$ and $v_{vehicle}$ are identical, it may be assumed that the tire has no tire wear. In this case, the tire radius R shown in Fig. 1 would be identical to the tire wear radius, WR shown in Fig. 1a and the difference 110 would be zero. If the comparison results in a difference, for example difference 110 in Fig. 1a or Fig. 1b, the difference between $v_{TMS}$ and $v_{vehicle}$ may be indicative of tire wear, for example proportional to a tire wear. However, more complex relationships between the comparison result and the actual tire wear are possible as disclosed herein.

In some embodiments, $v_{TMS}$ is determined based on an assumed tire radius, R, of the at least one tire of the vehicle. R may at least in part be based on the following equation:

$$R = SW \cdot AR + \frac{d_{RIM}}{2},$$

wherein SW is a section width of the at least one tire, AR is the aspect ratio of the tire and $d_{RIM}$ is a diameter of a rim 105 of the at least one tire 100 as for example shown in Fig. 1a and Fig. 1b.

The determining may be further based on a revolution period of the at least one tire, T, determined based on the tire movement data.

In some embodiments, $v_{TMS}$ is determined based at least partially on the following equation:

$$v_{TMS} = \frac{2 \cdot \pi \cdot R}{T}.$$

This may allow a way to determine $v_{TMS}$ as shown in Fig. 1a and Fig. 1b. However, more complex and/or more accurate ways to determine $v_{TMS}$ are also possible as disclosed herein.

The determining may be based on a determination of: a tire centrifugal acceleration, $a_c$, determined based on the data of the at least one sensor.

For example, $v_{TMS}$ may be determined at least partially based on the following equation:

$$v_{TMS} = \sqrt{a_c \cdot R}.$$

Thus, for different sensor types, different possibilities to determine $v_{TMS}$ may be used. If the at least one sensor comprises a plurality of sensors, combinations of these methods may be used.

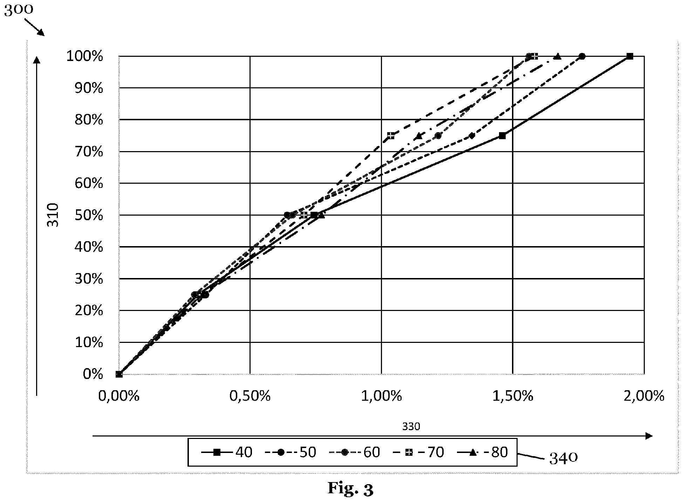

The determining may be further based on a correction factor which may have a functional dependence on vTMS, for example as illustrated in Fig. 3.

Fig. 3 shows a diagram 300. In diagram 300, the observed tire wear level in percent 310 is used as a measure for the tire wear. The observed tire wear level in percent 310 is shown as a function of a comparison 330 between vTMS and vvehicle. In the example of Fig. 3 the comparison 330 is a difference, wherein the difference is reported in percent, but other ways of comparison are also possible, for example differences in absolute values, for example in mm, cm, or inches or fractions etc.

As shown by the different test results at different velocities of the vehicle 340, a pristine tire has a tire wear level in percent 310 of 0%. Consequently, the comparison 330 results in a small value. As the tire wear (see reference numeral 310 in Fig. 3) increases, the difference in percent shown as comparison 310% also increases. Notably, depending on the velocity of the vehicle 340 in kilometers per hour, the actual value changes. In other words, as stated above, the determining may be further based on a correction factor which may have a functional dependence on vTMS. Alternatively, the complex behavior may be captured as parameters for a model, for example in a machine learning model which may support the determining of the tire wear from comparison 330 and additional parameters, for example vTMS 340 as illustrated in Fig. 3.

While Fig. 3 illustrates how the determining may be improved based on knowledge of vTMS, in a similar manner data may be obtained to account for the effect of additional input variables to improve accuracy of the determining of tire wear. For example, specific data may be taken into account as well, for example as part of a correction function or correction factor or as part of other methods, for example databases or machine learning algorithms. For example, the specific data may be at least one of the following: rolling radial acceleration of the at least one tire, lateral acceleration of the vehicle 501, longitudinal acceleration of the at least one tire, longitudinal acceleration of the vehicle 501, footprint size estimation of the at least one tire, speed estimation of the at least one tire, rotation position of the at least one tire, pressure of the at least one tire, temperature of the at least one tire, temperature of the environment of the vehicle 501, load on the at least one tire, vertical load on the at least one tire, manufacturer of the at least one tire, manufacturer of the vehicle 501, chassis information of the vehicle 501, tractor load information of the vehicle 501, model information of the at least one tire, pattern information of the at least one tire, size information of the at least one tire, mounting position information of the at least one tire, retread information of the at least one tire, manufacturing information, preferably batch number information, of the at least one tire.

However, other specific data as disclosed herein or additionally, may be used in addition or alternatively.

While explained mainly with reference to the first line of approach, these considerations may be applied to both the first and second line of approach.

Turning to the second line of approach, Fig. 2 shows an embodiment which may be used as part of the second line of approach.

Fig. 2 shows a tire 200 similar to tire 100 shown in Fig. 1a and Fig. 2b, with the at least one sensor 220 mounted on the tire 200.

As illustrated in Fig. 2, the rolling radius may be different from the tire radius R, for example due to vehicle load, vehicle speed $v_{vehicle}$ and other factors like tire pressure, temperature etc. As illustrated in Fig. 2, the determining in 630 of Fig. 6 may be based on determining a rolling radius, $R_r$, of the at least one tire based on $v_{vehicle}$ and the tire movement data.

In some embodiments, $R_r$ is determined based on T and may be determined based at least in part on the following equation:

$$ R_r = v_{vehicle} \cdot \frac{T}{2 \cdot \pi}. $$

$R_r$ may be at least in part based on the following equation:

$$ R_r = \frac{v_{vehicle}^2}{a_c}. $$

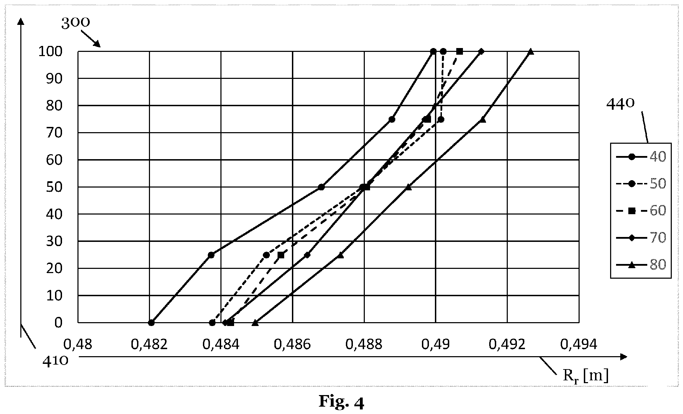

Fig. 4 shows an example, how tire wear may be determined based on rolling radius. In Fig. 4 the remaining thread depth in percent 410 is a measure of tire wear. The remaining thread depth in percent 410 is shown as a function of $R_r$, with $R_r$ shown in units of Meters in the example of Fig. 4. Depending on $v_{vehicle}$ 440, the relationship in Fig. 4 is influenced. If this relationship is known, for example as shown in Fig. 4, the tire wear may be determined as described herein.

For the example tire of Fig. 4, a rolling radius $R_r$=0.488 m measured at $v_{vehicle}$=70 km/h indicates a remaining thread depth of 50%. The determining of the tire wear may take further factors into account as disclosed herein, for example tire temperature, vehicle load etc. not shown as functional dependence in Fig. 4.

As can be seen in Fig. 4, the tire wear, for example represented as remaining tread depth, may be represented by a function like

$$ \alpha \cdot R_r + \beta \cdot v_{vehicle} + \gamma + \cdots. $$

Here, parameters $\alpha, \beta, \gamma$ etc. may be determined as known in the art, for example by regression analysis of data. In some embodiments, $\beta$ may be determined from Fig. 4 or similar datasets as the datasets shown in Fig. 4.

In some embodiments, the determining 630 is based on a deviation between $R_r$ and a theoretical rolling radius, $R_{r,theoretical}$. $R_{r,theoretical}$ may take additional factors into account, for example $R_{r,theoretical}$ may be a function of $v_{vehicle}$, tire pressure etc.

$R_r$ may at least in part be determined based on the following equation:

$$ R_r = \frac{v_{vehicle}^2}{a_c}. $$

This allows determination based on acceleration data from the at least one sensor.

In some embodiments, the calculation and/or at least one measurement of the at least one sensor is conducted at specific points in time, where the points in time may be selected based on points in time with a low variability and/or specific values of the specific data. For example, the specific data may be at least one of the following: rolling radial acceleration of the at least one tire, lateral acceleration of the vehicle 501, longitudinal acceleration of the at least one tire, longitudinal acceleration of the vehicle 501, rotation position of the at least one tire, load on the at least one tire, vertical load on the at least one tire, vehicle usage, tractor load, region, country, gear shifting information, engine rotations per minute, RPM, information, throttle pedal position of the vehicle 501, brake pedal position of the vehicle 501, steering wheel angle of the vehicle 501, road type information, etc.

However, additional or different specific data are possible. For example, the accuracy may be improved if the measurement is performed when on a highway and no gear shifting occurs and the RPM information indicates a steady state driving situation and the brake pedal is not pressed while the steering wheel angle of the vehicle is indicating that the vehicle is driving in a straight line. However, other examples are possible. Further, data may be collected or extrapolated for different conditions, so that a determination may also be possible in other conditions by collecting the data.

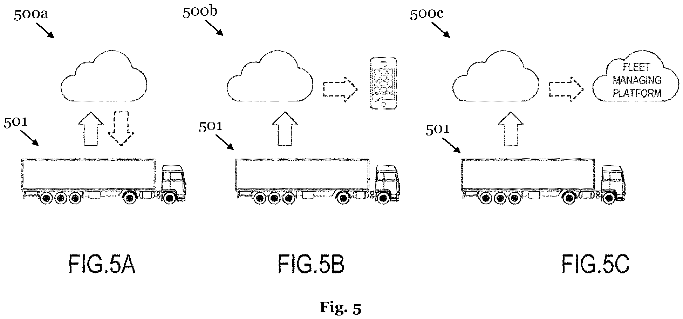

To this end, Fig. 5a to Fig. 5c illustrate exemplary data flows for collecting of information, for example specific data and how to communicate the tire wear information.

In particular, Fig. 5a, 5b and 5c illustrate different ways of how a calculated tire wear rate may be reported. The transmission of data such as technical data of a tire, technical data of a vehicle and telematics information of a vehicle are illustrated by black arrows. The black arrows may, alternatively or in addition, illustrate the transmission of the calculated tire wear rate, or in other words, the output of the computer-implemented method, in cases where the method is performed in the vehicle, or at a component outside the vehicle not shown in Fig. 5. In any event, the dotted arrows indicate the reporting of the calculated tire wear rate or model output.

As illustrated by Fig 5a, in one aspect, the tire wear may be calculated outside a vehicle, e.g., in a cloud computing environment. In this example, the required data, for example the tire movement data and the vehicle speed information may be transmitted to a cloud computing device. Within the cloud computing device, the calculation of the tire wear may take place and the calculated tire wear may be reported to at least the respective vehicle.

As it is shown by Fig. 5b and 5c, in addition, or alternatively, the report may be transmitted to a user computing device such as a smartphone, a notebook, a PC or a tablet or to a fleet managing platform.

In other examples as shown by Fig. 5b and 5c, the tire wear may be calculated in the vehicle. In this case, the calculated tire wear may be reported from the vehicle to at least one of a user computing device or a fleet managing platform.

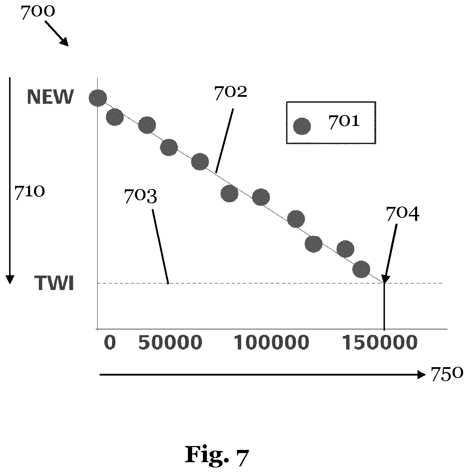

Fig. 7 shows a further embodiment. In the example of Fig. 7, the output of a tire wear model 702 is shown.

In other words, the method may comprise determining a projection 704 regarding a replacement need for the at least one tire based on the tire wear. In the example of Fig. 7, different measure points 701 for the tire wear 710 are shown as a function of mileage 750 of the tire. Based on the measurement points 701, the tire wear model 702 may allow for a projection 704 when a tire replacement is required.

As described above, the projection and/or the tire wear model 702 may depend on specific data. For example, if it is known that the vehicle will travel over roads with increased tire wear, for example through a country with known below average road conditions, the projection 704 may be adapted accordingly. In some embodiments, the tire wear model may be a machine learning model trained on data comprising a subset of the specific data. Thus, such a machine learning model may allow prediction of tire wear even as parameters like vehicle load, speed, pressure change.

**Claims**

1. A computer-implemented method (600) for determining a tire wear (110, 210, 310, 410, 710) of at least one tire (100, 200) mounted to a vehicle (501), the method comprising:

   obtaining (610) a vehicle speed information of the vehicle (501), $v_{vehicle}$,
   obtaining (620) tire movement data from at least one sensor (120) mounted to the at least one tire (100, 200) or at least one rim of the vehicle (501);
   determining (630) the tire wear (110, 210, 310, 410, 710) for the at least one tire (100, 200) based on: the tire movement data from the at least one sensor (120, 220) of the vehicle (501) and $v_{vehicle}$.

2. The computer-implemented method of claim 1, wherein the determining (630) is further based on:

   an assumed vehicle speed, $v_{TMS}$, determined based on the tire movement data and
   optionally wherein the determining (630) is further based on a correction factor which has a functional dependence on $v_{TMS}$.

3. The computer-implemented method of claim 2, wherein the determining (630) is based on a comparison (330) between $v_{TMS}$ and $v_{vehicle}$.

4. The computer-implemented method of any of claims 2 to 3, wherein $v_{TMS}$ is determined based on an assumed tire radius, R, of the at least one tire of the vehicle (501) and optionally

   wherein R is at least in part based on the following equation:

   $$R = SW \cdot AR + \frac{d_{RIM}}{2},$$

   wherein SW is a section width of the at least one tire, AR is the aspect ratio of the tire and $d_{RIM}$ is a diameter of a rim (105) of the at least one tire (100, 200).

5. The computer-implemented method of any of the previous claims, wherein the determining (630) is further based on a revolution period of the at least one tire, T, determined based on the tire movement data.

6. The computer-implemented method of claim 5, when dependent on claim 4 and further dependent on at least one of claims 2 and 3, wherein $v_{TMS}$ is determined based at least partially on the following equation:

$$v_{TMS} = \frac{2 \cdot \pi \cdot R}{T}.$$

7. The computer-implemented method of any of the previous claims, wherein the determining (630) is based on a determination of:
a tire centrifugal acceleration, $a_c$, determined based on the data of the at least one sensor.

8. The computer-implemented method of any of the previous claims when dependent on claim 7, claim 4, and at least one of claims 2 and 3, wherein $v_{TMS}$ is determined at least partially based on the following equation:

$$v_{TMS} = \sqrt{a_c \cdot R}.$$

9. The computer-implemented method of any of the previous claims, wherein the determining (630) is based on
determining a rolling radius, $R_r$, of the at least one tire based on $v_{vehicle}$ and the tire movement data.

10. The computer-implemented method of claim 9, wherein the determining (630) is based on a deviation between $R_r$ and a theoretical rolling radius, $R_{r,theoretical}$.

11. The computer-implemented method of claim 9 or claim 10 when dependent on claim 5, wherein $R_r$ is determined based on T and preferably is determined based at least in part on the following equation:

$$R_r = v_{vehicle} \cdot \frac{T}{2 \cdot \pi}.$$

12. The computer-implemented method of any of claims 9-11 when dependent on claim 7, wherein $R_r$ is at least in part based on the following equation:

$$R_r = \frac{v_{vehicle}^2}{a_c}.$$

13. The computer-implemented method of any of the previous claims, wherein the determining (630) is further based on specific data, wherein the specific data is at least one of the following:

$v_{vehicle}$ determined based at least on part on geographic positions of the vehicle (501),
rolling radial acceleration of the at least one tire,
lateral acceleration of the vehicle (501),
longitudinal acceleration of the at least one tire,
longitudinal acceleration of the vehicle (501),
footprint size estimation of the at least one tire,
speed estimation of the at least one tire,
rotation position of the at least one tire,
pressure of the at least one tire,
temperature of the at least one tire,
temperature of the environment of the vehicle (501),
load on the at least one tire,
vertical load on the at least one tire,
vehicle usage,
tractor load,
region,
country,
geographic position of the vehicle (501),
geographic position of the vehicle (501) determined by satellite data,
geographic position of the vehicle (501) determined by camera data,
geographic position of the vehicle (501) determined by sensor data,
geographic position of the vehicle (501) determined by toll data,
global positioning system, GPS, coordinates of the vehicle (501),
road type information,
vehicle load information,
gear shifting information,
engine rotations per minute, RPM, information,
throttle pedal position of the vehicle (501),
brake pedal position of the vehicle (501),
steering wheel angle of the vehicle (501),
manufacturer of the at least one tire,
manufacturer of the vehicle (501),
chassis information of the vehicle (501),
tractor load information of the vehicle (501),
model information of the at least one tire,
pattern information of the at least one tire,
size information of the at least one tire,
mounting position information of the at least one tire,
retread information of the at least one tire,
manufacturing information, preferably batch number information, of the at least one tire.

14. The computer-implemented method of claim 13, wherein the calculation and/or at least one measurement of the at least one sensor is conducted at specific points in time, where the points in time are selected based on points in time with a low variability of the specific data.

15. The computer-implemented method of any of the previous claims, further comprising: determining a projection (704) regarding a replacement need for the at least one tire based on the tire wear.

16. An apparatus (500a, 500b, 500c) for determining tire wear (110, 210, 310, 410, 710) of a vehicle (501), the apparatus configured to execute the method according to any one of claims 1 to 15.

**Fig. 1a**

**Fig. 1b**

**Fig. 2**

Fig. 3

**Fig. 4**

500a

500b

500c

501

501

501

FLEET
MANAGING
PLATFORM

FIG.5A

FIG.5B

FIG.5C

Fig. 5

600

610 — OBTAINING $V_{VEHICLE}$

620 — OBTAINING TIRE MOVEMENT DATA FROM AT LEAST ONE SENSOR

630 — DETERMINING THE TIRE WEAR BASED ON THE TIRE MOVEMENT DATA AND $V_{VEHICLE}$.

**Fig. 6**

**Fig. 7**

**Europäisches Patentamt**
**European Patent Office**
**Office européen des brevets**

# EUROPEAN SEARCH REPORT

Application Number

**EP 24 22 1668**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/060443 A1 (WAKAO YASUMICHI [JP] ET AL) 11 March 2010 (2010-03-11) | 1-3,13, 16 | INV. B60C11/24 |
| A | * paragraph [0007] - paragraph [0058]; figures 1-5,6a-6c; table 1 * | 4-12,14, 15 | |
| X | DE 10 2012 217901 B3 (CONTINENTAL AUTOMOTIVE GMBH [DE]) 28 May 2014 (2014-05-28) | 1-4,9, 10,13, 14,16 | |
| A | * paragraph [0006] - paragraph [0087]; figures 1-4 * | 5-8,11, 12,15 | |
| X | DE 10 2015 208270 A1 (BOSCH GMBH ROBERT [DE]) 10 November 2016 (2016-11-10) | 1-4,13, 16 | |
| A | * paragraph [0016] - paragraph [0030]; figures 1,3 * | 5-12,14, 15 | |
| X | DE 103 06 498 A1 (BAYERISCHE MOTOREN WERKE AG [DE]) 26 August 2004 (2004-08-26) | 1-3,9, 13,14,16 | |
| A | * paragraph [0004] - paragraph [0032]; figures 1,2 * | 4-8, 10-12,15 | |
| X | US 2023/202241 A1 (STEWART WILLIAM D [GB] ET AL) 29 June 2023 (2023-06-29) | 1-7, 9-11,13, 14,16 | TECHNICAL FIELDS SEARCHED (IPC) B60C |
| A | * paragraph [0002] - paragraph [0130]; figures 1-20 * | 8,12,15 | |
| X | US 2022/324266 A1 (ALGHOONEH MANSOOR [CA] ET AL) 13 October 2022 (2022-10-13) | 1,13,15, 16 | |
| A | * paragraph [0003] - paragraph [0077]; figures 1-4 * | 2-12,14 | |
| X | US 2019/270347 A1 (STEWART WILLIAM D [GB] ET AL) 5 September 2019 (2019-09-05) | 1,13,15, 16 | |
| A | * paragraph [0004] - paragraph [0044]; figures 1-6 * | 2-12,14 | |

The present search report has been drawn up for all claims

| Place of search | Date of completion of the search | Examiner |
|---|---|---|
| Munich | 29 April 2025 | Jung, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 22 1668

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2025

| Patent document cited in search report | Publication date | Patent family member(s) | | Publication date |
|---|---|---|---|---|
| US 2010060443 A1 | 11-03-2010 | EP | 2123487 A1 | 25-11-2009 |
| | | US | 2010060443 A1 | 11-03-2010 |
| | | WO | 2008072453 A1 | 19-06-2008 |
| DE 102012217901 B3 | 28-05-2014 | CN | 104781092 A | 15-07-2015 |
| | | DE | 102012217901 B3 | 28-05-2014 |
| | | EP | 2867036 A1 | 06-05-2015 |
| | | JP | 6045702 B2 | 14-12-2016 |
| | | JP | 2015530955 A | 29-10-2015 |
| | | KR | 20150038211 A | 08-04-2015 |
| | | US | 2015239298 A1 | 27-08-2015 |
| | | WO | 2014053322 A1 | 10-04-2014 |
| DE 102015208270 A1 | 10-11-2016 | NONE | | |
| DE 10306498 A1 | 26-08-2004 | NONE | | |
| US 2023202241 A1 | 29-06-2023 | CN | 115715257 A | 24-02-2023 |
| | | EP | 4139136 A1 | 01-03-2023 |
| | | US | 2023202241 A1 | 29-06-2023 |
| | | WO | 2021247036 A1 | 09-12-2021 |
| US 2022324266 A1 | 13-10-2022 | CN | 115246290 A | 28-10-2022 |
| | | DE | 102022105447 A1 | 13-10-2022 |
| | | US | 2022324266 A1 | 13-10-2022 |
| US 2019270347 A1 | 05-09-2019 | CN | 110228333 A | 13-09-2019 |
| | | DE | 102019104662 A1 | 05-09-2019 |
| | | GB | 2572250 A | 25-09-2019 |
| | | KR | 20190105505 A | 17-09-2019 |
| | | US | 2019270347 A1 | 05-09-2019 |

EPO FORM P0459

For more details about this annex : see Official Journal of the European Patent Office, No. 12/82